# EUROPÄISCHE PATENTSCHRIFT

(11) **EP 4 325 094 B1**
(45) Veröffentlichungstag und Bekanntmachung des Hinweises auf die Patenterteilung: **28.10.2026**
(21) Anmeldenummer: 23183541.4
(22) Anmeldetag: 05.07.2023
(51) Int. Cl.: F16K 1/22, F16K 1/226, F16K 27/02, H01M 8/00

(54) **STELLKLAPPENBAUGRUPPE, INSBESONDERE FÜR EINEN GASSTROM IN EINEM BRENNSTOFFZELLENSYSTEM**
REGULATING FLAP ASSEMBLY, IN PARTICULAR FOR A GAS FLOW IN A FUEL CELL SYSTEM
ENSEMBLE DE VOLETS DE RÉGLAGE, EN PARTICULIER POUR UN FLUX DE GAZ DANS UN SYSTÈME DE PILE À COMBUSTIBLE

(30) Priorität: 11.08.2022 DE 102022120288
(43) Veröffentlichungstag der Anmeldung: 21.02.2024
(73) Patentinhaber: Purem GmbH, 66539 Neunkirchen (DE)
(72) Erfinder: Lory, Markus, Stuttgart (DE); Grün, Matthias, Altbach (DE); Wacker, Andreas, Plochingen (DE); Hammer, Jochen, Stuttgart (DE)
(74) Vertreter: Ruttensperger Lachnit Trossin Gomoll

(56) Entgegenhaltungen:
- DE-A1- 2 733 606
- DE-B- 1 177 433
- DE-T5- 112014 007 122

## Beschreibung

Die vorliegende Erfindung betrifft eine Stellklappenbaugruppe, die beispielsweise für einen Gasstrom in einem Brennstoffzellensystem, insbesondere in einem Fahrzeug, eingesetzt werden kann, um elektrische Energie bereitzustellen.

In derartigen Brennstoffzellensystemen ist es erforderlich, abhängig vom Betriebszustand, verschiedene Gasströme durch den Anodenbereich bzw. den Kathodenbereich einer Brennstoffzelle bzw. eines Brennstoffzellenstapels hindurch zu leiten bzw. daran vorbei zu leiten. Dabei besteht eine hohe Anforderung an die Dichtigkeit von zur Regulierung derartiger Gasströme eingesetzten Stellklappenbaugruppen, um zu gewährleisten, dass insbesondere in Betriebszuständen, in welchen ein bestimmter Gasstrom nicht durch eine Brennstoffzelle oder nicht an einer Brennstoffzelle vorbei geleitet werden soll, Leckageströme ausgeschlossen werden können bzw. im Wesentlichen kein Gas zur Umgebung entweichen kann.

Eine Stellklappenbaugruppe gemäß dem Oberbegriff des Anspruchs 1 ist aus der DE 27 33 606 A1 bekannt. Bei dieser Stellklappenbaugruppe ist in einem als Lagerring wirksamen Antifriktionsglied eine nach radial innen zu einer eine Schwenkwelle aufnehmenden Öffnung offene Ringnut vorgesehen, in welcher ein als O-Ring ausgebildetes Dichtelement von dem Aufbaumaterial des Antifriktionsglieds umgeben aufgenommen ist.

Es ist die Aufgabe der vorliegenden Erfindung, eine Stellklappenbaugruppe, insbesondere für einen Gasstrom in einem Brennstoffzellensystem, insbesondere in einem Fahrzeug, bereitzustellen, welche bei konstruktiv einfacher Ausgestaltung Gasleckagen im Wesentlichen verhindern kann.

Erfindungsgemäß wird diese Aufgabe gelöst durch eine Stellklappenbaugruppe, insbesondere für einen Gasstrom in einem Brennstoffzellensystem, insbesondere in einem Fahrzeug, gemäß Anspruch 1, umfassend ein einen Gasströmungskanal bereitstellendes Stellklappengehäuse, eine in dem Stellklappengehäuse zwischen einer eine Gasströmung durch den Gasströmungskanal im Wesentlichen unterbindenden Schließstellung und wenigstens einer den Gasströmungskanal zur Durchströmung freigebenden Offenstellung verstellbaren Stellklappe mit einem an einer um eine Schwenkwellenachse drehbaren Schwenkwelle getragenen, scheibenartigen Stellklappenkörper, wobei die Schwenkwelle einen mit einem Schwenkwellenantrieb zu koppelnden, in einem ersten Lagerbereich an dem Stellklappengehäuse um die Schwenkwellenachse drehbaren getragenen ersten Schwenkwellen-Endabschnitt und einen in einem zweiten Lagerbereich an dem Stellklappengehäuse um die Schwenkwellenachse drehbar getragenen zweiten Schwenkwellen-Endabschnitt aufweist, wobei wenigstens ein Lagerbereich von erstem Lagerbereich und zweitem Lagerbereich eine die Schwenkwelle drehbar stützende Lagereinheit und wenigstens ein in der Lagereinheit getragenes und an einer Außenumfangsfläche der Schwenkwelle anliegendes Dichtelement umfasst.

Durch das Bereitstellen des an der Außenumfangsfläche der Schwenkwelle anliegenden wenigstens einen Dichtelements ist gewährleistet, dass auch bei Auftreten eines Lagerspiels im Bereich der wenigstens einen Lagereinheit ein gegen den Austritt von Gas dichter Abschluss der Stellschraubenbaugruppe erreicht wird.

Da im ersten Schwenkwellen-Endabschnitt die Schwenkwelle durch den zugeordneten ersten Lagerbereich hindurchgeführt werden muss, um eine Kopplung mit dem Schwenkwellenantrieb erreichen zu können, ist es für einen gasdichten Abschluss besonders vorteilhaft, wenn der wenigstens eine Lagerbereich der erste Lagerbereich ist. Im zweiten Lagerbereich, in welchem die Schwenkwelle mit ihrem zweiten Schwenkwellenachse nicht durch den Lagerbereich hindurch bzw. aus diesen heraus geführt sein muss, kann ein gasdichter Abschluss durch andere Maßnahmen, beispielsweise das vollständige Umkapseln des zweiten Schwenkwellen Endabschnitts mit einer Lagerbuchse, bereitgestellt werden.

Für einen über den gesamten Umfang der Schwenkwelle vollständig gasdichten Anschluss des wenigstens einen Dichtelements an die Schwenkwelle wird vorgeschlagen, dass das wenigstens eine Dichtelement die Schwenkwellenachse ringartig umgibt, oder/und dass die Lagereinheit die Schwenkwellenachse ringartig umgibt.

Um eine stabile Positionierung des Dichtelements in dem Aufbaumaterial der Lagereinheit einerseits und eine zu einer ausreichenden Abdichtung führende Wechselwirkung mit der Schwenkwelle andererseits gewährleisten zu können, umfasst das wenigstens eine Dichtelement einen von einem Aufbaumaterial der Lagereinheit umgriffenen Halteabschnitt und einen an der Schwenkwelle anliegenden Dichtabschnitt.

Die Lagereinheit umfasst wenigstens einen Lagerring, und der Halteabschnitt des wenigstens einen Dichtelements ist in das Aufbaumaterial eines Lagerrings dadurch eingebettet, dass der Halteabschnitt bei der Herstellung des Lagerrings mit dem Aufbaumaterial desselben umgossen wird.

Bei einer alternativen erfindungsgemäßen Ausgestaltung umfasst die Lagereinheit wenigstens zwei Lagerringe, und der Halteabschnitt des wenigstens einen Dichtelements ist zwischen zwei Lagerringen gehalten. Dies ermöglicht eine baulich sehr einfache Ausgestaltung bei gleichwohl definierter Positionierung des wenigstens einen Dichtelements zwischen den beiden Lagerringen.

Um insbesondere den Dichtabschnitt vergleichsweise groß dimensionieren zu können und damit eine hohe Flexibilität des Dichtabschnitts bereitstellen zu können, wird vorgeschlagen, dass der Halteabschnitt sich im Wesentlichen axial in dem Aufbaumaterial der Lagereinheit erstreckt, und dass der Dichtabschnitt sich vom Halteabschnitt nach radial innen auf die Schwenkwelle zu erstreckt. Bei dieser Ausgestaltung ist das wenigstens eine Dichtelement im Wesentlichen topfartig ausgebildet mit einer im Wesentlichen den Halteabschnitt umfassenden Umfangswand und einer die Schwenkwelle aufnehmenden Öffnung in einem im Wesentlichen den Dichtabschnitt umfassenden Boden.

Beispielsweise kann dabei der Dichtabschnitt sich nach radial innen und in Richtung von der Lagereinheit weg auf die Schwenkwelle zu erstrecken.

Bei einer alternativen Ausgestaltung kann der Halteabschnitt sich im Wesentlichen radial in dem Aufbaumaterial der Lagereinheit erstrecken, und der Dichtabschnitt kann sich vom Halteabschnitt nach radial innen auf die Schwenkwelle zu erstrecken. Bei dieser Ausgestaltung ist das wenigstens eine Dichtelement im Wesentlichen ringscheibenartig ausgebildet.

Für eine stabile Halterung der Schwenkwelle und auch der Lagereinheit am Stellklappengehäuse wird vorgeschlagen, dass der wenigstens eine Lagerbereich eine an dem Stellklappengehäuse getragene Lagerbuchse umfasst, und dass die Lagereinheit in der Lagerbuchse durch Presspassung oder/und die Schwenkwelle gehalten ist.

Bei einer besonders einfach aufzubauenden und wartungsarmen Ausgestaltung kann die Lagereinheit eine Gleitlagereinheit sein.

Um im Bereich des wenigstens einen Dichtelements eine ausreichende Flexibilität zu erreichen, kann dieses mit Elastomermaterial aufgebaut sein.

Die Erfindung betrifft ferner ein Brennstoffzellensystem, insbesondere für ein Fahrzeug, umfassend wenigstens eine erfindungsgemäß aufgebaute Stellklappenbaugruppe.

Die Erfindung wird nachfolgend mit Bezug auf die beiliegenden Figuren detailliert beschrieben. Es zeigt:
- Fig. 1: eine Prinzipskizze eines Brennstoffzellensystems eines Fahrzeugs;
- Fig. 2: eine Stellklappenbaugruppe für ein Brennstoffzellensystem;
- Fig. 3: Schnittansicht eines Lagerbereichs für eine Schwenkwelle der Stellklappenbaugruppe;
- Fig. 4: eine der Fig. 3 entsprechende Ansicht einer alternativen Ausgestaltung;
- Fig. 5: eine weitere der Fig. 3 entsprechende Ansicht einer alternativen Ausgestaltung.

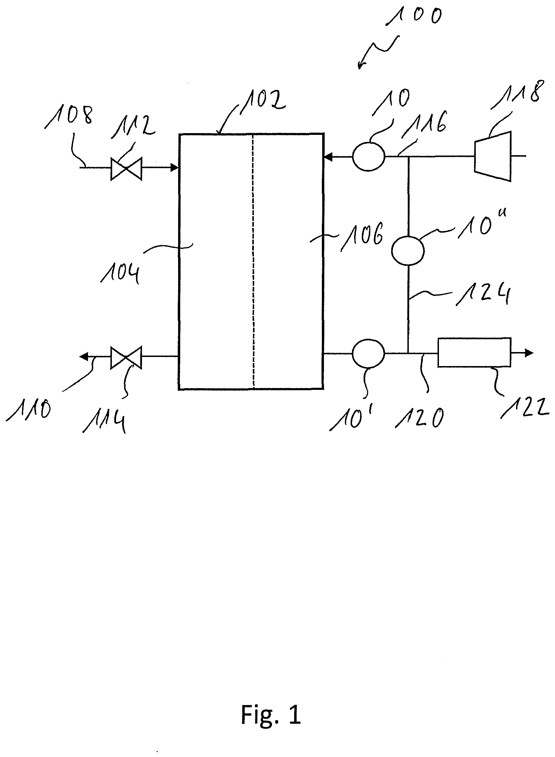

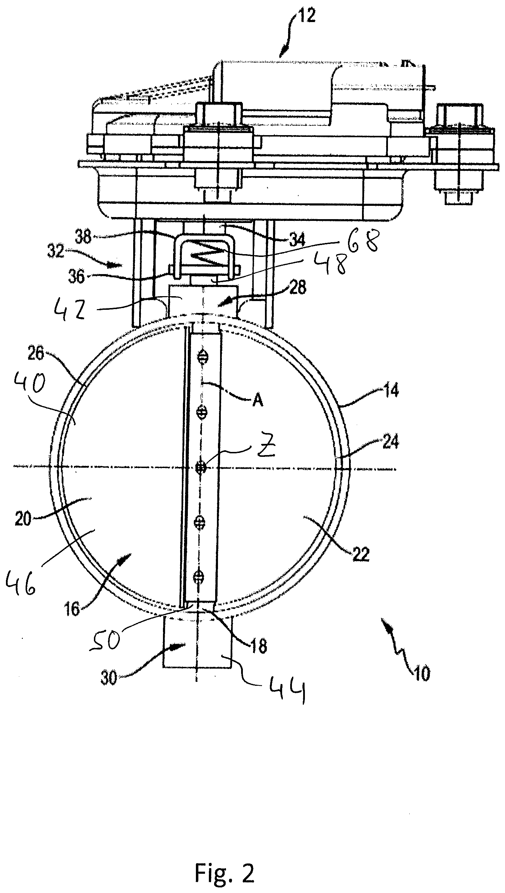

Bevor nachfolgend die erfindungsgemäße Ausgestaltung einer Stellklappenbaugruppe für ein Brennstoffzellensystem insbesondere hinsichtlich einer zum Bereitstellen eines dichten Abschlusses vorgesehenen Struktur derselben detailliert beschrieben wird, wird mit Bezug auf die Fig. 1 der grundsätzliche Aufbau eines Brennstoffzellensystems beschrieben, mit welchem in einem Fahrzeug elektrische Energie bereitgestellt werden kann, und wird mit Bezug auf die Fig. 2 der grundsätzliche Aufbau einer Stellklappenbaugruppe erläutert, mit welcher insbesondere in Zuordnung zum Kathodenbereich eines derartigen Brennstoffzellensystems der Gasstrom reguliert bzw. der Kathodenbereich gegen Durchströmung abgeschlossen werden kann.

Das in Figur 1 dargestellte Brennstoffzellensystem 100 umfasst als wesentlichen Systembereich eine allgemein mit 102 bezeichnete Brennstoffzelle mit einem mit Wasserstoff bzw. einem Wasserstoff enthaltenden Gas zu speisenden Anodenbereich 104 und einem mit Sauerstoff bzw. einem Sauerstoff enthaltenden Gas, zum Beispiel Luft, zu speisenden Kathodenbereich 106.

Dem Anodenbereich 104 sind eine Zuführleitung 108 und eine Abführleitung 110 mit jeweiligen Ventilen 112, 114 zugeordnet, um den Wasserstoff bzw. das Wasserstoff enthaltende Gas in den Anodenbereich 104 einleiten zu können bzw. Anodenabgas aus diesem ableiten zu können und erforderlichenfalls den Anodenbereich 104 vollständig abschließen zu können.

Dem Kathodenbereich 106 ist eine Zuführleitung 116 zugeordnet, über welche beispielsweise vermittels eines Kompressors 118 oder dergleichen das Sauerstoff enthaltende Gas, also beispielsweise Luft, in diesen eingeleitet werden kann. In der Zuführleitung 116 ist eine allgemein mit 10 bezeichnete Stellenklappenbaugruppe vorgesehen, mit welcher der Gasstrom über die Zuführleitung 116 reguliert bzw. der Kathodenbereich 106 in seinem Einleitbereich im Wesentlichen gasdicht abgeschlossen werden kann.

Zum Ableiten von Kathodenabgas ist dem Kathodenbereich 106 eine Abführleitung 120 zugeordnet. Diese führt zu einer Brennstoffzellen-Abgasanlage 122, in welcher beispielsweise vermittels eines Wasserabscheiders im Kathodenabgas enthaltenes Wasser abgeschieden werden kann. Ferner ist in der Abführleitung 120 eine weitere Stellklappenbaugruppe 10' angeordnet, vermittels welcher die Abführleitung 120 und somit ein Ableitbereich des Kathodenbereichs 106 im Wesentlichen gasdicht abgeschlossen werden können.

Zwischen der Zuführleitung 116 und der Abführleitung 120 des Kathodenbereichs 106 verläuft eine Bypassleitung 124. Auch in der Bypassleitung 124 ist eine Stellklappenbaugruppe 10" angeordnet, mit welcher der Gasstrom über die Bypassleitung 124 reguliert werden kann bzw. die Bypassleitung 124 im Wesentlichen gasdicht abgeschlossen werden kann.

Es ist darauf hinzuweisen, dass der in Figur 1 dargestellte und vorangehend beschriebene Aufbau des Brennstoffzellensystems 100 nur ein Beispiel einer Vielzahl verschiedener Möglichkeiten der Zufuhr und Abfuhr von Gas insbesondere am Kathodenbereich 106 veranschaulicht. Maßgeblich ist, dass in Zuordnung zu dem Kartonbereich 106 zumindest eine, gegebenenfalls mehrere Stellklappenbaugruppen 10, 10', 10" vorgesehen sind, wobei dann, wenn mehrere derartige Stellklappenbaugruppen 10, 10', 10" vorgesehen sind, diese zu einander grundsätzlich baugleich sein können oder abhängig davon, in welchem Bereich sie positioniert sind und welches Ausmaß an Gasdichtigkeit durch diese bereitzustellen ist, auch unterschiedlich gestaltet sein können.

Die in Fig. 2 dargestellte und beispielsweise in dem Brennstoffzellensystem 100 der Fig. 1 eingesetzte Stellklappenbaugruppe 10 umfasst einen beispielsweise elektromotorischen Stellklappenantrieb 12 und in einem rohrartig ausgebildeten und einen Gasströmungskanal 46 umgrenzenden Stellklappengehäuse 14 eine allgemein mit 16 bezeichnete Stellklappe.

Die Stellklappe 16 umfasst einen an einer Schwenkwelle 18 um eine Schwenkwellenachse A schwenkbar getragenen, scheibenartigen Stellklappenkörper 24 mit zwei jeweils einen Klappenflügel bereitstellenden Stellklappenkörperteilen 20, 22. In Zuordnung zu der Stellklappe 16 ist am Stellklappengehäuse 14 ein Stellklappensitz 26 vorgesehen, an welchem die Stellklappe 16 in einer Schließstellung derselben mit einem bezüglich eines Zentralbereichs Z der Stellklappe 16 radial außen liegenden Abschlussbereich 40 anliegt.

Zum Bewegen der Stellklappe 16 zwischen der Schließstellung und einer vollkommen geöffneten Stellung, in welcher der scheibenartige Stellklappenkörper 24 zur Zeichenebene der Fig. 1 im Wesentlichen orthogonal orientiert ist und somit den Gasströmungskanal 46 im Stellklappengehäuse 14 zur Durchströmung im Wesentlichen vollständig freigibt, ist eine Antriebswelle 34 des Stellklappenantriebs 12 vermittels einer Kopplungsanordnung 32 mit der in Lagerbereichen 28, 30 am Stellklappengehäuse 14 um die Schwenkwellenachse A schwenkbar getragenen Schwenkwelle 18 zur gemeinsamen Drehung gekoppelt. Dabei umfasst die Kopplungsanordnung 32 beispielsweise ein mit der Antriebswelle 34 drehfest verbundenes Kopplungsteil 38 und ein mit der Schwenkwelle 18 drehfest verbundenes Kopplungsteil 36, welches mit dem Kopplungsteil 38 in Drehkopplungseingriff steht.

Jeder der beiden Lagerbereiche 28, 30 umfasst eine am Stellklappengehäuse 14 getragene, beispielsweise an einer Außenumfangsfläche desselben durch Verschweißung festgelegte, Lagerbuchse 42, 44, in welcher ein jeweiliger axialer Endabschnitt der Schwenkwelle 18 um die Schwenkwellenachse A drehbar aufgenommen ist.

Von den beiden Lagerbereichen 28, 30 bildet der Lagerbereich 28 einen ersten Lagerbereich, in welchem ein erster Schwenkwellen-Endabschnitt 48 der Schwenkwelle 18 drehbar gelagert ist. Der erste Schwenkwellen-Endabschnitt 48 steht axial über den ersten Lagerbereich 28 hervor, um vermittels der Kopplungsanordnung 32 mit der Antriebswelle 34 gekoppelt zu werden. Der Lagerbereich 30 bildet einen zweiten Lagerbereich, in welchem ein zweiter Schwenkwellen-Endabschnitt 50 der Schwenkwelle 18 um die Schwenkwellenachse A drehbar gelagert ist.

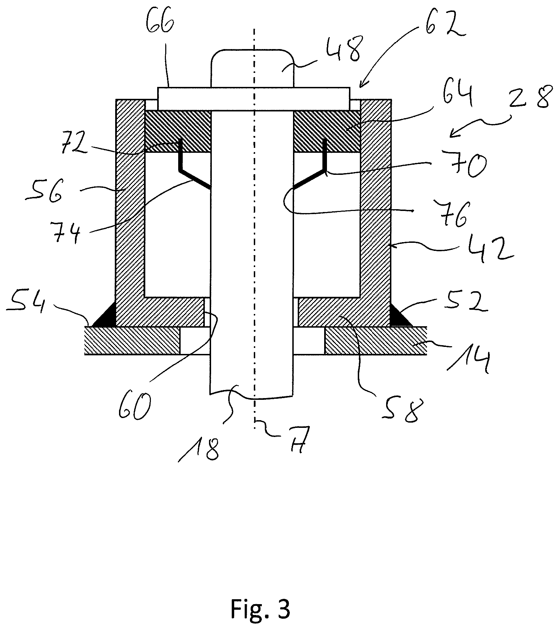

In Fig. 3 ist der erste Lagerbereich 28 detailliert dargestellt. Der erste Lagerbereich 28 umfasst die beispielsweise durch eine vollständig umlaufende Schweißnaht 52 gasdicht an der Außenumfangsfläche 54 des Stellklappengehäuses 14 festgelegte Lagerbuchse 42. Die Lagerbuchse 42 umfasst eine Umfangswand 56 und eine einen an diese anschließenden Boden 58 mit einer von der Schwenkwelle 18 durchsetzten Öffnung 60. Es ist darauf hinzuweisen, dass die Lagerbuchse 42 auch lediglich die Umfangswand 56 und keine Bodenwand aufweisen kann, was insbesondere bei der gewölbten Kontur der Außenumfangsfläche 54 des Stellklappengehäuses 14 eine einfachere Festlegung der Lagerbuchse 42 am Stellklappengehäuse 14 bzw. auch eine einfacher herzustellende Ausgestaltung der Lagerbuchse 42 ermöglicht.

In der Lagerbuchse 42 ist eine allgemein mit 62 bezeichnete Lagereinheit aufgenommen. Die Lagereinheit 62 umfasst im dargestellten Ausgestaltungsbeispiel einen den ersten Schwenkwellenendabschnitt 48 aufnehmenden und radial stützenden Lagerring 64 und ist somit als Gleitlagereinheit ausgebildet. Der Lagerring 64 kann in der Lagerbuchse 42 beispielsweise durch Presspassung aufgenommen sein und somit in definierter axialer Positionierung an der Umfangswand 56 der Lagerbuchse 42 gehalten sein. Die Schwenkwelle 18 kann mit einem am ersten Schwenkwellen-Endabschnitt 48 der vorgesehenen, flanschartigen Schwenkwellenkopf 66 axial am Lagerring 64 abgestützt sein. Eine die Schwenkwelle 18 mit ihrem Schwenkwellenkopf 66 in Anlage an dem Lagerring 64 haltende Vorspannkraft kann durch eine zwischen der Schwenkwelle 18 bzw. dem Kopplungsteil 36 einerseits und der Antriebswelle 34 bzw. dem Kopplungsteil 38 andererseits wirkende Vorspannfeder 68 bereitgestellt sein, so dass mit der definierten Positionierung des Lagerrings 64 in der Lagerbuchse 42 auch eine definierte Positionierung der Schwenkwelle 18 und somit der gesamten Stellklappe 16 im Stellklappengehäuse 14 vorgegeben ist.

An dem Lagerring 64 der Lagereinheit 62 ist ein allgemein mit 70 bezeichnetes Dichtelement getragen. Das Dichtelement 70 weist einen in das Aufbaumaterial des Lagerrings 64 eingebetteten und näherungsweis ein Richtung der Schwenkwellenachse A sich erstreckenden, somit also im Wesentlichen zylindrischen Halteabschnitt 72 auf, welcher an der dem Stellklappengehäuse 14 zugewandten Stirnseite des Lagerrings 64 aus diesem bzw. dessen Aufbaumaterial axial hervorsteht. Von dem Halteabschnitt 72 des Dichtelements 70 erstreckt sich ein Dichtabschnitt 74 nach radial innen und in Richtung von dem Lagerring 64 weg. Der Dichtabschnitt 74 weist somit eine im Wesentlichen kegelartige bzw. kegelstumpfartige Formgebung auf und weist in einem zentralen Bereich eine von dem ersten Schwenkwellen-Endabschnitt 64 durchsetzte Öffnung 76 auf. Diese Öffnung ist grundsätzlich so dimensioniert, dass diese bei nicht durch diese hindurchgeführter Schwenkwelle 18 eine bezüglich einer Querschnittsabmessung der Schwenkwelle 18 kleinere Querschnittsabmessung aufweist, so dass bei bzw. nach dem Hindurchführen der Schwenkwelle 18 durch die Öffnung 76 der Dichtabschnitt 74 des Dichtelements 70 unter Vorspannung an der Außenumfangsfläche der Schwenkwelle 18 anliegt. Somit ist durch das Dichtelement 70 einerseits durch die Einbettung des Halteabschnitts 72 in das Aufbaumaterial des Lagerrings 64 und andererseits durch die vorgespannte Anlage des Dichtabschnitts 74 an der Schwenkwelle 18 ein vollkommen gasdichter Abschluss im Bereich des ersten Lagerbereichs 28 erreicht ist, durch welchen die Schwenkwelle 18 zur Kopplung mit der Antriebswelle 34 hindurchgeführt ist.

Das Einbetten des beispielsweise mit Elastomermaterial aufgebauten Dichtelements 70 mit seinem Halteabschnitt 72 in das Aufbaumaterial des Lagerrings 64 kann dadurch erreicht werden, dass bei der Herstellung des Lagerrings 64 das Dichtelement 70 im Bereich seines Halteabschnitts 72 zumindest bereichsweise mit dem Aufbaumaterial des Lagerrings 64 umformt wird, beispielsweise umgossen wird. Um hier eine noch stabilere Haltewechselwirkung zu erreichen, kann beispielsweise das Dichtelement 70 in seinem Halteabschnitt 72 mit einer strukturierten Oberfläche oder einer Querschnittsvariation, beispielsweise einem wulstartigen Endbereich, ausgebildet sein.

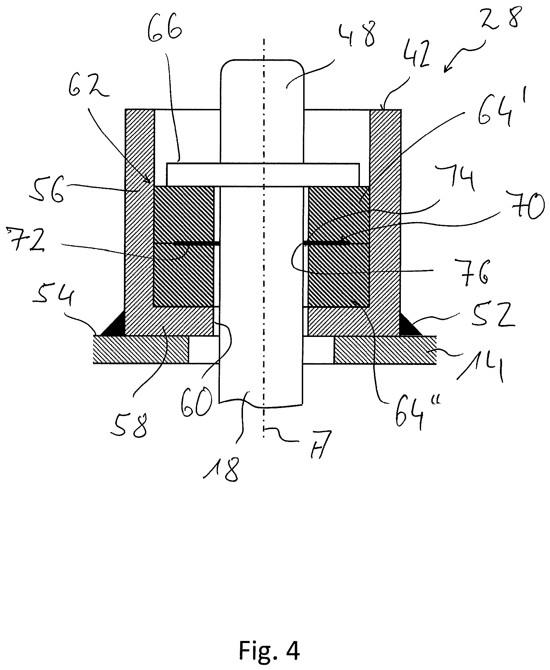

Eine alternative Ausgestaltung des ersten Lagerbereichs 28 ist in Fig. 4 dargestellt. Bei der in Fig. 4 dargestellten Ausgestaltung umfasst die die Schwenkwelle 18 bzw. deren Schwenkwellenkopf 66 auch axial abstützende Lagereinheit 62 zwei Lagerringe 64', 64". Die beiden Lagerringe 64', 64" sind im dargestellten Ausgestaltungsbeispiel axial aneinander anschließend angeordnet, und der Lagerring 64" kann sich beispielsweise am Boden 58 der Lagerbuchse 42 axial abstützen. Auch bei dieser Ausgestaltung können die beiden Lagerringe 64', 64" durch Presspassung in der Lagerbuchse 42 aufgenommen sein. Alternativ oder zusätzlich kann eine Haltewirkung für die beiden Lagerringe 64', 64" durch die axial auf diese zu vorgespannte Schwenkwelle 18 bzw. deren Schwenkwellenkopf 66 bereitgestellt werden.

Zwischen den beiden Lagerringen 64, 64' ist das in dieser Ausgestaltungsform im Wesentlichen scheibenartig ausgebildete Dichtelement 70 aufgenommen. Der Halteabschnitt 72 des Dichtelements 70 liegt zwischen den beiden Lagerringen 64', 64", und der Dichtabschnitt 74 erstreckt sich radial innen auf die Außenumfangsfläche der Schwenkwelle 18 zu. Es ist darauf hinzuweisen, dass in dieser Darstellung das zwischen der Schwenkwelle 18 und den Lagerringen 64', 64" vorhandene Lagerspiel übertrieben dargestellt ist, um den Aufbau des Dichtelements 70 bzw. dessen Wechselwirkung mit der Schwenkwelle 18 deutlicher darstellen zu können.

Um auch bei dieser Ausgestaltung eine definierte radiale Positionierung des Dichtelements 70 gewährleisten zu können, kann in zumindest einem der beiden Lagerringe 64', 64" ein der dem jeweils anderen Lagerring zugewandt zu positionierenden Stirnseite eine der Größe bzw. der Formgebung des Dichtelements 70 entsprechende Aussparung ausgebildet sein, so dass das Dichtelement 70 zwischen den beiden Lagerringen 64', 64" auch bei axialer Beaufschlagung beispielsweise durch die Schwenkwelle 18 im Wesentlichen ohne oder nur mit geringer axialer Vorspannung gehalten sein kann und insbesondere auch an seinem Außenumfang von dem Aufbaumaterial von zumindest einem der beiden Lagerringe 64', 64" umgriffen sein kann.

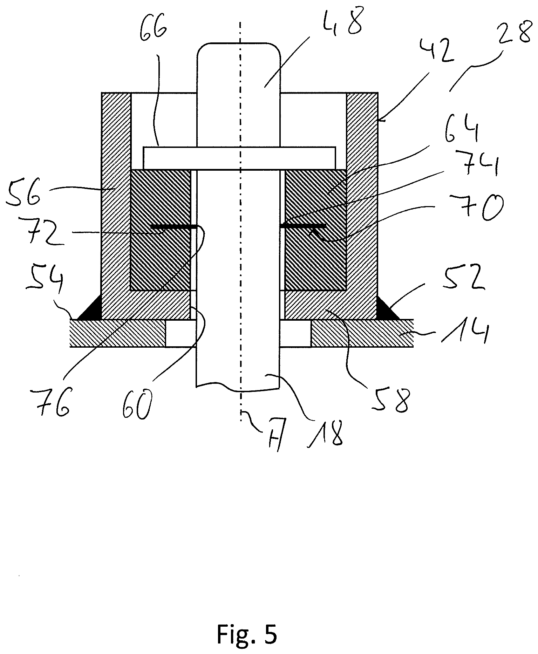

Eine weitere alternative Ausgestaltung des ersten Lagerbereichs 28 ist in Fig. 5 dargestellt. Diese Ausgestaltung vereinigt die Ausgestaltungskonzepte der in den Fig. 3 und 4 dargestellten Ausgestaltungsformen. Das Dichtelement 70 ist ringscheibenartig ausgebildet und in das Aufbaumaterial des einzigen Lagerrings 64 der Lagereinheit 62 mit seinem Halteabschnitt 72 eingebettet. Der Dichtabschnitt 74 steht nach radial innen zur Dichtwechselwirkung mit der Schwenkwelle 18 hervor. Auch bei dieser Ausgestaltung kann der Halteabschnitt 72 durch Umformen mit dem Aufbaumaterial des Lagerrings 64 mit diesem umgeben werden. Auch hier kann eine verstärkte Haltewechselwirkung dadurch erreicht werden, dass beispielsweise die Oberfläche des Halteabschnitts 72 strukturiert ist oder/und beispielsweise am Außenumfang des Halteabschnitts 72 eine wulstartige Erweiterung gebildet ist. Mit der vorliegenden Erfindung wird in einfacher Art und Weise die Möglichkeit geschaffen, die Schwenkwelle der Stellklappe insbesondere in demjenigen axialen Endabschnitt, in welchem diese mit dem Schwenkwellenantrieb zu koppeln ist, gegen den Austritt von Gas aus dem Stellklappengehäuse 14 abzuschließen.

Es ist darauf hinzuweisen, dass grundsätzlich auch im zweiten Lagebereich 30 eine derartige Struktur vorgesehen sein könnte. Da im zweiten Lagebereich 30 die Schwenkwelle 18 jedoch nicht aus diesem herauszuführen ist, kann ein gasdichter Abschluss beispielsweise auch dadurch erreicht werden, dass die Lagerbuchse 44 des zweiten Lagerbereichs 30 den zweiten Schwenkwellen-Endabschnitt vollständig, also auch axial umkapselt, beispielsweise indem an einer Umfangswand der Lagerbuchse 44 ein die Lagerbuchse 44 axial abschließender Deckel vorgesehen ist.

Abschließend ist zu betonen, dass eine erfindungsgemäß aufgebaute Stellklappenbaugruppe auch in anderen Anwendungen, insbesondere auch bei stationären Brennstoffzellensystemen, Anwendung finden kann.

## Patentansprüche

1. Stellklappenbaugruppe, insbesondere für einen Gasstrom in einem Brennstoffzellensystem (100), insbesondere in einem Fahrzeug, umfassend ein einen Gasströmungskanal (46) bereitstellendes Stellklappengehäuse (14), eine in dem Stellklappengehäuse (14) zwischen einer eine Gasströmung durch den Gasströmungskanal (46) im Wesentlichen unterbindenden Schließstellung und wenigstens einer den Gasströmungskanal (46) zur Durchströmung freigebenden Offenstellung verstellbaren Stellklappe (16) mit einem an einer um eine Schwenkwellenachse (A) drehbaren Schwenkwelle (18) getragenen, scheibenartigen Stellklappenkörper (24), wobei die Schwenkwelle (18) einen mit einem Schwenkwellenantrieb (12) zu koppelnden, in einem ersten Lagerbereich (28) an dem Stellklappengehäuse (14) um die Schwenkwellenachse (A) drehbaren getragenen ersten Schwenkwellen-Endabschnitt (48) und einen in einem zweiten Lagerbereich (30) an dem Stellklappengehäuse (14) um die Schwenkwellenachse (A) drehbar getragenen zweiten Schwenkwellen-Endabschnitt (50) aufweist, wobei wenigstens ein Lagerbereich von erstem Lagerbereich (28) und zweitem Lagerbereich (30) eine die Schwenkwelle (18) drehbar stützende Lagereinheit (62) und wenigstens ein in der Lagereinheit (62) getragenes und an einer Außenumfangsfläche der Schwenkwelle (18) anliegendes Dichtelement (70) umfasst, wobei das wenigstens eine Dichtelement (70) einen von einem Aufbaumaterial der Lagereinheit (62) umgriffenen Halteabschnitt (72) und einen an der Schwenkwelle (18) anliegenden Dichtabschnitt (74) umfasst, und wobei die Lagereinheit (62) wenigstens einen Lagerring (64; 64', 64") umfasst,
**dadurch gekennzeichnet,**
- **dass** der Halteabschnitt (72) des wenigstens einen Dichtelements (70) durch Umgießen mit dem Aufbaumaterial des Lagerrings (64) bei Herstellung des Lagerrings (64) in das Aufbaumaterial das Lagerrings (64) eingebettet ist,
oder
- **dass** die Lagereinheit (62) wenigstens zwei Lagerringe (64', 64") umfasst, und dass der Halteabschnitt (72) des wenigstens einen Dichtelements (70) zwischen zwei Lagerringen (64', 64") gehalten ist.

2. Stellklappenbaugruppe nach Anspruch 1, **dadurch gekennzeichnet, dass** der wenigstens eine Lagerbereich der erste Lagerbereich (28) ist.

3. Stellklappenbaugruppe nach Anspruch 1 oder 2, **dadurch gekennzeichnet, dass** das wenigstens eine Dichtelement (70) die Schwenkwellenachse (A) ringartig umgibt, oder/und dass die Lagereinheit (62) die Schwenkwellenachse (A) ringartig umgibt.

4. Stellklappenbaugruppe nach einem der Ansprüche 1-3, **dadurch gekennzeichnet, dass** der Halteabschnitt (72) sich im Wesentlichen axial in dem Aufbaumaterial der Lagereinheit (62) erstreckt, und dass der Dichtabschnitt (74) sich vom Halteabschnitt (72) nach radial innen auf die Schwenkwelle (18) zu erstreckt.

5. Stellklappenbaugruppe nach Anspruch 4, **dadurch gekennzeichnet, dass** der Dichtabschnitt (74) sich nach radial innen und in Richtung von der Lagereinheit (62) weg auf die Schwenkwelle (18) zu erstreckt.

6. Stellklappenbaugruppe nach einem der Ansprüche 1-3, **dadurch gekennzeichnet, dass** der Halteabschnitt (72) sich im Wesentlichen radial in dem Aufbaumaterial der Lagereinheit (62) erstreckt, und dass der Dichtabschnitt (74) sich vom Halteabschnitt (72) nach radial innen auf die Schwenkwelle (18) zu erstreckt.

7. Stellklappenbaugruppe nach einem der Ansprüche 1-6, **dadurch gekennzeichnet, dass** der wenigstens eine Lagerbereich eine an dem Stellklappengehäuse (14) getragene Lagerbuchse (42) umfasst, und dass die Lagereinheit (62) in der Lagerbuchse (42) durch Presspassung oder/und die Schwenkwelle (18) gehalten ist.

8. Stellklappenbaugruppe nach einem der Ansprüche 1-7, **dadurch gekennzeichnet, dass** die Lagereinheit (62) eine Gleitlagereinheit ist.

9. Stellklappenbaugruppe nach einem der Ansprüche 1-8, **dadurch gekennzeichnet, dass** das wenigstens eine Dichtelement (70) mit Elastomermaterial aufgebaut ist.

10. Brennstoffzellensystem, insbesondere für ein Fahrzeug, umfassend wenigstens eine Stellklappenbaugruppe (10) nach einem der vorangehenden Ansprüche.

## Claims

1. A butterfly valve assembly, in particular for a gas flow in a fuel cell system (100), in particular in a vehicle, comprising a butterfly valve housing (14) which provides a gas flow channel (46), a butterfly valve (16) which is adjustable in the butterfly valve housing (14) between a closed position, substantially preventing a gas flow through the gas flow channel (46), and at least one open position, opening up the gas flow channel (46) for a passage of flow, and which has a disk-shaped butterfly valve element (24) supported on a pivot shaft (18) which is rotatable about a pivot shaft axis (A), the pivot shaft (18) having a first pivot shaft end portion (48), which is provided for coupling to a pivot shaft drive (12) and which in a first bearing region (28) is supported rotatably about the pivot shaft axis (A) on the butterfly valve housing (14), and a second pivot shaft end portion (50), which in a second bearing region (30) is supported rotatably about the pivot shaft axis (A) on the butterfly valve housing (14), wherein at least one bearing region out of the first bearing region (28) and second bearing region (30) comprises a bearing unit (62), which rotatably supports the pivot shaft (18), and at least one sealing element (70), which is supported in the bearing unit (62) and which lies against an outer circumferential surface of the pivot shaft (18), wherein the at least one sealing element (70) comprises a holding portion (72), which is encompassed by a structural material of the bearing unit (62), and a sealing portion (74), which lies against the pivot shaft (18), and wherein the bearing unit (62) comprises at least one bearing ring (64, 64', 64"),
**characterized**
- **in that** the holding portion (72) of the at least one sealing element (70) is embedded into the structural material of the bearing ring (64) by recasting with the structural material of the bearing ring (64) when producing the bearing ring (64),
or
- **in that** the bearing unit (62) comprises at least two bearing rings (64', 64"), and in that the holding portion (72) of the at least one sealing element (70) is held between two bearing rings (64', 64").

2. The butterfly valve assembly as claimed in claim 1, **characterized in that** the at least one bearing region is the first bearing region (28).

3. The butterfly valve assembly as claimed in claim 1 or 2, **characterized in that** the at least one sealing element (70) annularly surrounds the pivot shaft axis (A), or/and **in that** the bearing unit (62) annularly surrounds the pivot shaft axis (A).

4. The butterfly valve assembly as claimed in any one of claims 1-3, **characterized in that** the holding portion (72) extends substantially axially in the structural material of the bearing unit (62), and **in that** the sealing portion (74) extends radially inward from the holding portion (72) toward the pivot shaft (18).

5. The butterfly valve assembly as claimed in claim 4, **characterized in that** the sealing portion (74) extends radially inward, and in a direction away from the bearing unit (62), toward the pivot shaft (18).

6. The butterfly valve assembly as claimed in any one of claims 1-3, **characterized in that** the holding portion (72) extends substantially radially in the structural material of the bearing unit (62), and **in that** the sealing portion (74) extends radially inward from the holding portion (72) toward the pivot shaft (18).

7. The butterfly valve assembly as claimed in any one of claims 1-6, **characterized in that** the at least one bearing region comprises a bearing bushing (42) which is supported on the butterfly valve housing (14), and **in that** the bearing unit (62) is held in the bearing bushing (42) by means of an interference fit or/and the pivot shaft (18).

8. The butterfly valve assembly as claimed in any one of claims 1-7, **characterized in that** the bearing unit (62) is a plain bearing unit.

9. The butterfly valve assembly as claimed in any one of claims 1-8, **characterized in that** the at least one sealing element (70) is constructed with elastomer material.

10. A fuel cell system, in particular for a vehicle, comprising at least one butterfly valve assembly (10) as claimed in any one of the preceding claims.

## Revendications

1. Un ensemble de vanne papillon, destiné en particulier à un écoulement de gaz dans un système de pile à combustible (100), notamment dans un véhicule, comprenant un boîtier de vanne papillon (14) qui définit un canal d'écoulement de gaz (46), une vanne papillon (16) qui est réglable dans le boîtier de vanne papillon (14) entre une position fermée, empêchant sensiblement tout écoulement de gaz à travers le canal d'écoulement de gaz (46), et au moins une position ouverte, dégageant le canal d'écoulement de gaz (46) pour permettre le passage d'un écoulement, et qui comporte un élément de vanne papillon (24) en forme de disque, monté sur un arbre de pivotement (18) pouvant tourner autour d'un axe de l'arbre de pivotement (A), l'arbre de pivotement (18) comportant une première partie d'extrémité d'arbre de pivotement (48), prévue pour être couplée à un entraînement d'arbre de pivotement (12) et qui, dans une première zone de palier (28), est supportée de manière rotative autour de l'axe de l'arbre de pivotement (A) sur le boîtier de vanne papillon (14), et une deuxième partie d'extrémité d'arbre de pivotement (50), qui, dans une deuxième zone de palier (30), est supportée de manière rotative autour de l'axe de l'arbre de pivotement (A) sur le boîtier de vanne papillon (14), dans lequel au moins une des zones de palier parmi la première zone de palier (28) et la deuxième zone de palier (30) comprend une unité de palier (62), qui supporte de manière rotative l'arbre de pivotement (18), et au moins un élément d'étanchéité (70), qui est logé dans l'unité de palier (62) et qui s'appuie contre une surface circonférentielle extérieure de l'arbre de pivotement (18), dans lequel ledit au moins un élément d'étanchéité (70) comprend une partie de retenue (72), qui est entourée par un matériau de structure de l'unité de palier (62), et d'une partie d'étanchéité (74) qui s'appuie contre l'arbre de pivotement (18), et dans lequel l'unité de palier (62) comprend au moins une bague de palier (64, 64', 64"), **caractérisé en ce que**
- la partie de retenue (72) dudit au moins un élément d'étanchéité (70) est noyée dans le matériau de structure de la bague de palier (64) par coulée conjointe avec le matériau de structure de la bague de palier (64) lors de la fabrication de la bague de palier (64),
ou
- **en ce que** l'unité de palier (62) comprend au moins deux bagues de palier (64', 64'"), et **en ce que** la partie de retenue (72) dudit au moins un élément d'étanchéité (70) est maintenue entre deux bagues de palier (64", 64").

2. L'ensemble de vanne papillon selon la revendication 1, **caractérisé en ce que** ladite au moins une zone de palier est la première zone de palier (28).

3. L'ensemble de vanne papillon selon la revendication 1 ou 2, **caractérisé en ce que** ledit au moins un élément d'étanchéité (70) entoure de manière annulaire l'axe de l'arbre de pivotement (A), ou/et **en ce que** l'unité de palier (62) entoure de manière annulaire l'axe de l'arbre de pivotement (A).

4. L'ensemble de vanne papillon selon l'une quelconque des revendications 1 à 3, **caractérisé en ce que** la partie de retenue (72) s'étend sensiblement axialement dans le matériau de structure de l'unité de palier (62), et **en ce que** la partie d'étanchéité (74) s'étend radialement vers l'intérieur à partir de la partie de retenue (72) en direction de l'arbre de pivotement (18).

5. L'ensemble de vanne papillon selon la revendication 4, **caractérisé en ce que** la partie d'étanchéité (74) s'étend radialement vers l'intérieur, et dans une direction s'éloignant de l'unité de palier (62), vers l'arbre de pivotement (18).

6. L'ensemble de vanne papillon selon l'une quelconque des revendications 1 à 3, **caractérisé en ce que** la partie de retenue (72) s'étend sensiblement radialement dans le matériau de structure de l'unité de palier (62), et **en ce que** la partie d'étanchéité (74) s'étend radialement vers l'intérieur à partir de la partie de retenue (72) en direction de l'arbre de pivotement (18).

7. L'ensemble de vanne papillon selon l'une quelconque des revendications 1 à 6, **caractérisé en ce que** ladite au moins une zone de palier comprend une douille de palier (42) qui est supportée sur le boîtier de vanne papillon (14), et **en ce que** l'unité de palier (62) est maintenue dans la douille de palier (42) au moyen d'un ajustement serré ou/et de l'arbre de pivotement (18).

8. L'ensemble de vanne papillon selon l'une quelconque des revendications 1 à 7, **caractérisé en ce que** l'unité de palier (62) est une unité de palier lisse.

9. L'ensemble de vanne papillon selon l'une quelconque des revendications 1 à 8, **caractérisé en ce que** ledit au moins un élément d'étanchéité (70) est réalisé en un matériau élastomère.

10. Un système de pile à combustible, en particulier pour un véhicule, comprenant au moins un ensemble de vanne papillon (10) selon l'une quelconque des revendications précédentes.
